# EUROPEAN PATENT APPLICATION

(11) **EP 3 639 987 A1**
(43) Date of publication of application: **22.04.2020**
(21) Application number: 18200427.5
(22) Date of filing: 15.10.2018
(51) Int. Cl.: B25J 15/00, B25J 15/02, B25J 15/06, B65B 69/00

(54) **ROBOTIC TOOL FOR A REPLENISHMENT PLANT**

(71) Applicant: Tetra Laval Holdings & Finance S.A., 1009 Pully (CH)
(72) Inventor: LACCHINI, Livio, 43126 Parma (IT); BARBATO, Antonio, 41012 Carpi (IT)
(74) Representative: Tetra Pak - Patent Attorneys SE

(57) **Abstract**

There is described a robotic tool (6) for a replenishment plant (1) configured to replenish a storage unit (2) with a plurality of caps destined to be applied onto packages containing a pourable product; the replenishment plant (1) is provided with a robotic arm (5) configured to carry at least one receptacle (4) containing the caps from an input station (I), at which the receptacle (4) is provided in a closed state, to an output station (O), at which the caps are fed to the storage unit (2) by emptying the receptacle (4) arranged in an open state; the robotic arm (5) carrying, in use, the robotic tool (6) between the input station (I) and the output station (0); the robotic tool (6) comprises gripping means (32) configured to pick the receptacle (4) at the input station (I) and to carry the receptacle (4) from the input station (I) to the output station (O), and an opening assembly (9) configured to control the receptacle (4) from the closed state to the open state.

## Description

### TECHNICAL FIELD

The present invention relates to a robotic tool for a replenishment plant, in particular an automatic cap replenishment plant for replenishing a hopper with caps configured to be applied on respective packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated sheet of packaging material.

In particular, the packaging material has a multilayer structure substantially comprising a base layer for stiffness and strength, which may be made of fibrous material, e.g. paper or mineral-filled polypropylene material, and a number of lamination layers made of heat-seal plastic material, e.g. polyethylene films, covering both sides of the base layer.

In the case of aseptic packages for long-storage products, such as UHT milk or fruit juice, the packaging material also comprises a layer of gas-barrier material, e.g. aluminum foil or ethyl vinyl alcohol (EVOH) film, which is superimposed on a layer of heat-seal plastic material, and is in turn covered with another layer of heat-seal plastic material. This latter layer of plastic material forms the inner face of the package eventually contacting the pourable food product.

Packages of this sort are normally produced on fully automatic packaging assemblies, in which a continuous tube is formed from the sheet of packaging material.

In detail, the tube of packaging material is first filled with the pourable food product, and then is formed, sealed and cut so as to obtain a plurality of sealed pillow packs containing the pourable food product.

The pillow packs are then folded mechanically to form respective finished, substantially parallelepiped-shaped packages.

Once formed, the above-mentioned packages may undergo further operations, such as the application of a reclosable cap.

At present, the most commonly marketed caps comprise:
- a frame defining a pour opening for the package and fitted about a hole or a pierceable portion or a removable portion of a top wall of the package; and
- a closing member hinged or screwed to the frame and which is removable to open the package.

Alternatively, other types of caps, e.g. slide-open caps, are also known to be used.

The pierceable portion of the package may be defined, for example, by a so-called "prelaminated" hole, i.e. a hole formed in the base layer of the packaging material and covered by the layer of gas-barrier material, which is whole and closes the hole to ensure airtight, aseptic sealing, while still being easily pierceable.

In order to apply the caps on the relative packages, an applicator unit is provided in a position operatively downstream of the packaging assembly.

In particular, the applicator unit is configured to apply each cap, i.e. each frame and the relative closing member, on one respective package by heat sealing or by gluing the cap on the top wall of the package, so as to cover the above-described prelaminated hole.

According to an alternative embodiment, the frames are pre-applied, for example injection molded, onto the top wall of the respective packages, whereas the applicator unit is configured to screw the corresponding closing members onto such pre-applied frames.

Typically, the applicator unit comprises a hopper configured to receive and temporarily store the caps to be applied on the packages. Hence, the hopper defines a temporary storage device (or a buffer) of caps for the applicator unit.

In order to maintain the production rate at the desired level, such hopper has to be periodically replenished with caps.

The caps are usually contained in respective plastic bags provided inside relative boxes, which are normally closed by a strip of adhesive tape.

At present, replenishment of the hopper is carried out manually by an operator.

Accordingly, the operator manually picks up, one by one, the boxes containing the caps, opens such boxes by cutting the adhesive tape and then bends outwardly the flaps of each box and maintains such flaps open.

At the same time, the operator manually opens the plastic bag and fits the plastic bag onto the upper edge of the box, so as to wrap such upper edge. This latter operation allows to prevent any dust located between the box and the bag from falling into the hopper.

Eventually, the operator pours the caps into the hopper.

A need is felt in the industry to optimize replenishment timing, achieve proper hygienic conditions of the operation and reduce the injury risks linked to the operation.

### DISCLOSURE OF INVENTION

It is therefore an object of the present invention to provide a robotic tool for a replenishment plant, which is designed to fulfill at least one of the above-mentioned needs in a straightforward and low-cost manner.

This object is achieved by a robotic tool for a replenishment plant as claimed in claim 1.

### BRIEF DESCRIPTION OF THE DRAWINGS

A non-limiting embodiment of the present invention will be described by way of example with reference to the accompanying drawings, in which:
Figure 1 shows a perspective view, with parts removed for clarity, of a replenishment plant comprising a robotic arm provided with a robotic tool according to the present invention;
Figures 2a and 2b are larger-scale schematic top views, with parts removed for clarity, of a component of the robotic tool of Figure 1 during two different operating conditions;
Figures 3a and 3b are two larger-scale top views, with parts removed for clarity, of the robotic tool of Figure 1 during two different operating conditions; and
Figure 4 is a further larger-scale perspective view, with parts removed for clarity, of the robotic tool of Figure 1.

### BEST MODE FOR CARRYING OUT THE INVENTION

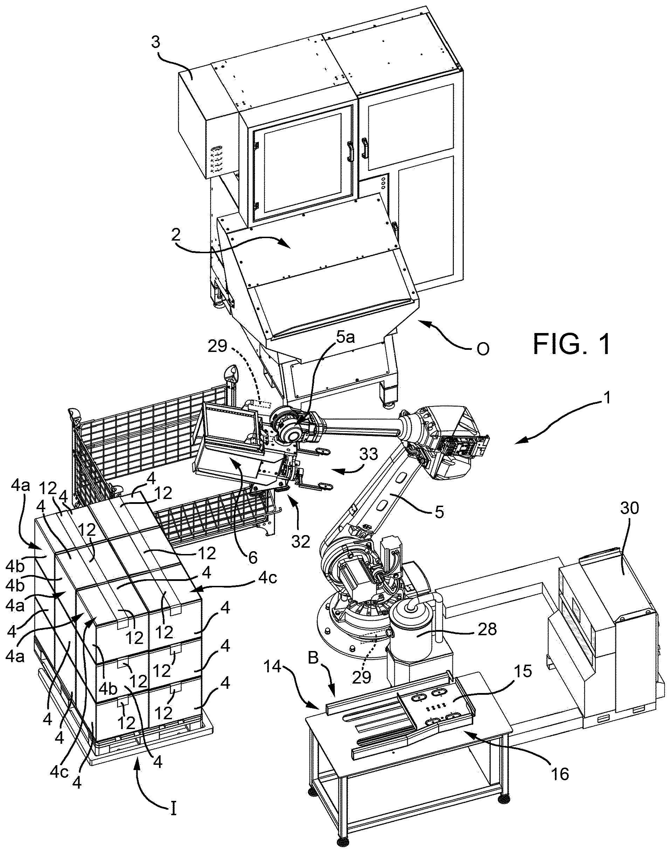

With reference to Figure 1, number 1 indicates as a whole a replenishment plant configured to replenish a storage unit, in particular a temporary storage unit, even more in particular a hopper 2, with a plurality of caps (not shown) destined to be applied on packages (not shown) containing a pourable product, in this specific case a pourable food product.

Such packages are produced, in a manner known and not described in detail, from sheets of packaging material comprising: a base layer, e.g. of fibrous material, such as cardboard, or of mineral-filled polypropylene material; and a number of layers of heat-seal plastic material, e.g. polyethylene film, covering both sides of the base layer. In the case of aseptic packages for long-storage products, such as UHT milk, the packaging material also comprises a layer of gas-and light-barrier material, e.g. aluminum foil or ethyl vinyl alcohol (EVOH) film, which is superimposed on a layer of heat-seal plastic material, and is in turn covered with another layer of heat-seal plastic material forming the inner face of package eventually contacting the food product.

Once produced, each package undergoes further operations, such as the application thereon of a respective cap, preferably a reclosable cap.

In particular, each package, which is, for example, substantially parallelepiped-shaped, has, on a top wall, an opening or a pierceable portion or a removable portion, which is configured to be covered outwardly by one respective cap, applied thereon by a cap applicator unit 3 (only partially shown).

As visible in Figure 1, hopper 2 is part of cap applicator unit 3, and is preferably arranged in a rear portion of cap applicator unit 3.

In order to provide the required number of caps to be applied on the respective packages, i.e. to maintain the production rate at the desired level, hopper 2 has to be periodically replenished.

According to the preferred embodiment shown, replenishment plant 1 comprises:
- an input station I, at which a plurality of receptacles 4 in a closed state are provided, each one containing a plurality of caps; and
- an output station 0, at which said caps are fed to hopper 2 by emptying each receptacle 4 arranged in an open state from the caps, according to a manner that will be described below.

Reference is made hereinafter to a single receptacle 4 containing a plurality of caps and provided in the closed state at input station I.

However, the features disclosed hereinafter for, and in connection with, such receptacle 4 are applicable to all receptacles 4 provided at input station I.

In particular, receptacle 4 is defined by a substantially parallelepiped-shaped cardboard box.

More in particular, receptacle 4 comprises:
- a main body 4a, formed by four lateral walls 4b and a bottom wall (not shown), open on an upper side 4c thereof and housing, in use, the caps; and
- a top wall covering said upper side 4c so as to superiorly close main body 4a and prevent the caps from exiting receptacle 4.

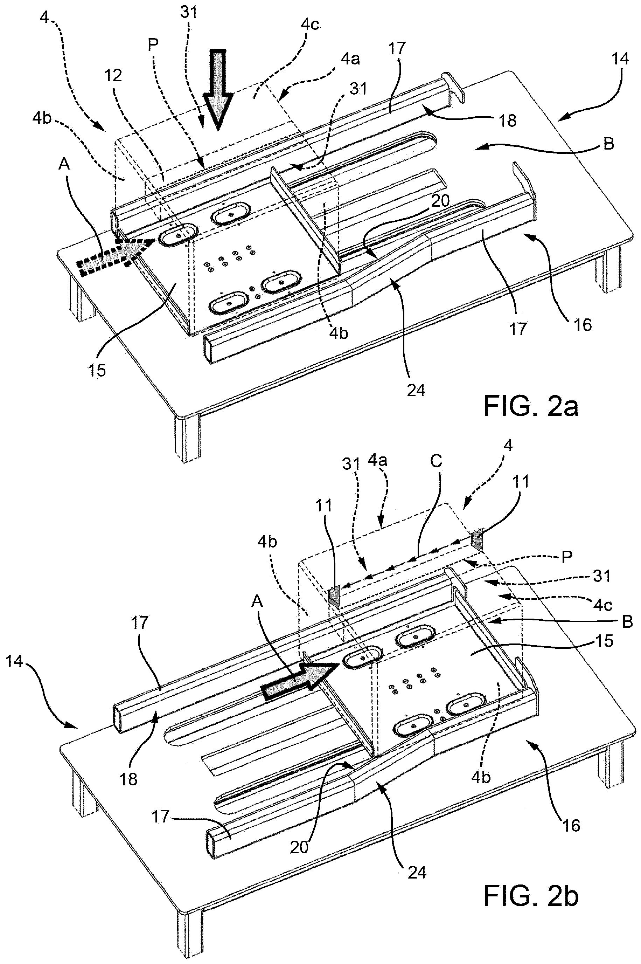

More specifically, the top wall is defined by an openable portion 31 (visible in Figures 2a and 2b) movably connected to main body 4a by means of a connecting portion defining a virtual hinge (not shown).

Preferably, top wall is defined by a pair of such openable portions 31, which constitute two openable halves of the top wall and are movable between:
- a closing position, in which the openable portions 31 cover the upper side 4c of main body 4a, so as to prevent the caps from exiting from receptacle 4; and
- an opening position, in which the openable portions 31 uncover the upper side 4c of main body 4a, so as to allow the caps to exit from receptacle 4.

In other words, openable portions 31 constitute the movable cardboard flaps, hinged on main body 4a of receptacle 4, that have to be opened in order to empty receptacle 4.

According to an alternative embodiment not shown, the top wall could be defined by more than two openable portions 31, for example four openable portions 31.

The two openable portions 31 are held together in the closing position by a cuttable member, preferably a strip 12 of adhesive tape applied on receptacle 4. In particular, strip 12 is already applied on receptacle 4 when receptacle 4 is provided at input station I.

According to a further alternative embodiment not shown, the top wall could be defined by a single openable portion 31 hinged on one upper edge of main body 4a and entirely covering upper side 4c. In this last case, strip 12 holds together such single openable portion 31 and another upper edge of main body 4a opposite to said one upper edge, so as to close upper side 4c.

Conveniently, receptacle 4 comprises an opening path P (Figures 2a and 2b) configured to be opened, in particular to be cut open, so as to allow emptying of receptacle 4.

In detail, opening path P is rectilinear and extends along strip 12.

Accordingly, in order to open receptacle 4, it is sufficient to cut open strip 12 and loosen openable portions 31 from main body 4a, according to a manner that will be described below.

According to the present embodiment, with the purpose of maintaining the caps in proper hygienic conditions, the caps are provided inside a bag element, preferably a thin-walled bag made of polymeric material, housed within receptacle 4.

In detail, such bag comprises an opening portion which is openable, for example under the action of a suction device, in particular when receptacle 4, once opened, is turned upside down and emptied from the caps at output station 0.

By way of example, such opening portion of the bag is defined by a pair of edges folded one about the other, which can be moved away from one another to open the bag.

Replenishment plant 1 further comprises a robotic arm 5 configured to carry receptacle 4, in particular to carry one receptacle 4 at a time, from input station I to output station 0.

In detail, robotic arm 5 comprises a robotic tool 6 arranged at, in particular coupled to, a top end portion 5a of such robotic arm 5.

In greater detail, robotic arm 5 carries (displaces), in use, robotic tool 6 between input station I and output station 0.

More precisely, robotic arm 5 displaces, in use, robotic tool 6 between input station I, output station 0 and an opening station B (shown in Figures 1, 2a and 2b) operatively arranged between input station I and output station 0.

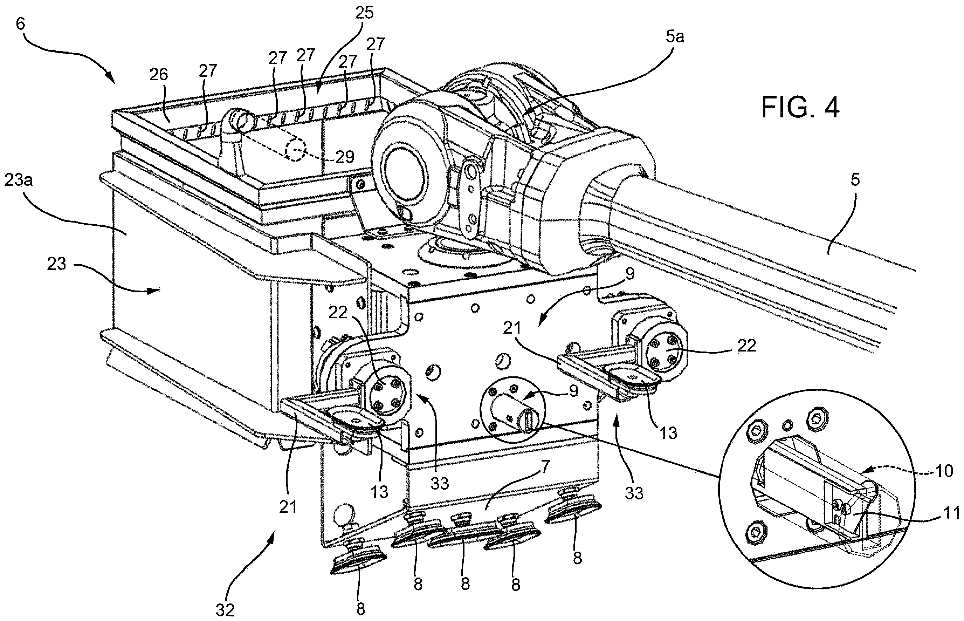

As visible in Figures 1 and 4, robotic tool 6 comprises:
- gripping means 32 configured to pick receptacle 4 at input station I and to carry receptacle 4 from input station I to output station 0; and
- an opening assembly 9 configured to control receptacle 4 from the closed state to the open state, thereby allowing the caps to exit from receptacle 4 at output station 0.

In detail, gripping means 32 comprise:
- a first picking device 7 configured to pick receptacle 4 in the closed state at input station I and to carry receptacle 4 at least from input station I to opening station B, in particular to release receptacle 4 at opening station B; and
- a second picking device, in particular a jaw member 23, configured to pick receptacle 4 arranged in the open state at opening station B and to carry receptacle 4 to output station 0.

In greater detail, first picking device 7 is integrally carried by robotic tool 6.

As visible in Figure 4, first picking device 7 comprises a set of first suction cups 8, five in this specific embodiment, configured to cooperate in contact with the top wall of receptacle 4, and activable, in use, to apply a suction thereon capable of retaining receptacle 4 at least from input station I to opening station B.

In practice, robotic arm 5 controls, in use, a movement of robotic tool 6 towards input station I, so as to bring suction cups 8 in contact with the top wall, and, therefore, with openable portions 31 of the receptacle 4 to be picked up, openable portions 31 being in their closing positions. Once in contact with openable portions 31, suction cups 8 are activated to apply a suction thereon capable of retaining receptacle 4.

In this way, robotic arm 5, by means of robotic tool 6 and first picking device 7, can pick (lift) receptacle 4 from input station I and carry receptacle 4 towards opening station B.

According to the embodiment described herein, robotic tool 6 is further configured to perform opening operations on receptacle 4, so as to allow emptying of receptacle 4 from the caps at output station 0. Such opening operations are carried out by means of opening assembly 9 at opening station B, after receptacle 4 is released thereon by first picking device 7.

With reference to Figures 1, 2a and 2b, replenishment plant 1 further comprises a table unit 14 operatively arranged between input station I and output station 0, in particular arranged laterally relatively to robotic arm 5, and configured to support receptacle 4 at least during the above-mentioned opening operations.

Accordingly, table unit 14 defines opening station B.

More specifically, robotic tool 6 releases, in use, receptacle 4 on table unit 14 by de-activating suction cups 8, prior to performing the opening operations on such receptacle 4.

According to this non-limiting preferred embodiment, table unit 14 comprises a movable receiving seat, in particular a slide 15 configured to receive receptacle 4 from robotic tool 6 and to be controlled to reciprocate along an advancing direction A between:
- a first position, in which slide 15 receives, in use, receptacle 4 (Figure 2a); and
- a second position, in which slide 15 supports receptacle 4 while robotic tool 6 performs, in use, the opening operations thereon (Figure 2b).

Preferably, slide 15 is controlled to move between the first position and the second position by means of a not shown motor, in particular an electric motor.

In light of the above, slide 15 is configured to move receptacle 4 along direction A from:
- a release position, in which receptacle 4 is released by robotic arm 5, in particular by suction cups 8 of robotic tool 6, onto slide 15; to
- an operative position, in which receptacle 4 is subject to the opening operations and then is picked up again by robotic arm 5, in particular by jaw member 23 of robotic tool 6.

In detail, receptacle 4 is in the release position when slide 15 is in the first position; receptacle 4 is in the operative position when slide 15 is in the second position.

For the purpose of carrying out the above-mentioned opening operations, robotic tool 6 is equipped with the above-mentioned opening assembly 9, which is configured to open receptacle 4 after receptacle 4 has been released onto slide 15 and arranged by slide 15 in the operative position.

More precisely, opening assembly 9 comprises a first opening device, in particular an extractable cutting device, preferably an extractable knife 11, housed inside a housing 10 fixed on robotic tool 6, in particular on a back wall of robotic tool 6.

Opening assembly 9 further comprises extracting means (not shown) configured to automatically extract knife 11 from housing 10 and to automatically retract knife 11 into housing 10 at the end of the opening operations.

Preferably, extracting means are of the pneumatic type, i.e. are configured to control the extraction and the retraction of knife 11 by means of air pressure.

According to an alternative embodiment not shown, extracting means may be of the electromagnetic type or of the hydraulic type.

Conveniently, knife 11 is configured to be controlled, in particular moved, along a pre-determined nominal cutting path C, schematically shown in Figure 2b.

More specifically, robotic arm 5 is programmable, in a known manner, to control the movement of robotic tool 6, so that knife 11 is moved along such nominal cutting path C.

In this specific embodiment, cutting path C is rectilinear and substantially parallel to direction A.

Conveniently, the above-mentioned opening path P, which extends on strip 12, has to correspond to (i.e., overlap), in particular has to be aligned with, cutting path C, to cause the knife 11 to properly cut the strip 12 of adhesive tape and allow openable portions 31 of receptacle 4 to be loosened from main body 4a.

For this purpose, replenishing plant 1 comprises a positioning device 16 configured to position receptacle 4, during at least part of the movement of receptacle 4 from the release position towards the operative position, so as to align opening path P with cutting path C.

According to this specific embodiment, positioning device 16 comprises a pair of wall elements 17 extending on table unit 14 and defining a guide channel 18 for receptacle 4.

In detail, guide channel 18 substantially extends along direction A.

In greater detail, guide channel 18 comprises a tapered-section portion 20 configured to cooperate in contact with receptacle 4, during at least part of the movement of receptacle 4 from the release position towards the operative position, so as to rotate (move) receptacle 4 and cause opening path P to align with cutting path C.

More specifically, in the case that robotic tool 6 released receptacle 4 on slide 15 in a non-nominal position, causing opening path P to be transversal, hence not parallel, to direction A, knife 11 would cut strip 12 of adhesive tape along a non-nominal cutting path, different from opening path P and not overlapping opening path P.

This could cause damage to the receptacle 4 or could cause strip 12 not to be cut the right way and, thus, receptacle 4 could not be opened in the proper manner.

This is avoided thanks to positioning device 16, which operates in the manner described above.

As visible in Figures 2a and 2b, tapered-section portion 20 defines a constriction of guide channel 18.

In detail, at least one of the wall elements 17 comprises an inclined portion 24, inclined relatively to direction A and transversal to the remaining portion of such wall element 17.

During its movement from the release position towards the operative position, the mispositioned receptacle 4 cooperates in contact with such inclined portion 24.

After the constriction, lateral walls 4b of receptacle 4 cooperate in contact with both wall elements 17 and are thereby guided towards the operative position, where opening path P is nominally aligned with cutting path C (Figure 2b).

More specifically, after moving past the constriction of guide channel 18, receptacle 4 fits inside guide channel 18 in such a way that lateral walls 4b of receptacle 4 contact both wall elements 17.

According to a non-shown embodiment, strip 12 could extend beyond the top wall of receptacle 4, being thus also partially applied on one or more lateral walls 4b, in particular on portions of lateral walls 4b contiguous to the top wall.

In this last case, knife 11 is configured to cut the entire strip 12, including the portions of strip 12 extending on lateral walls 4b, so as to permit opening of receptacle 4.

Once strip 12 has been cut open by knife 11, the openable portions 31 of receptacle 4 are loosened from main body 4a.

For the purpose of moving openable portions 31 from the closing position to the opening position, robotic tool 6 comprises a second opening device 33 configured to cooperate in contact with openable portions 31 and drivable, in use, to control the movement of each openable portion 31 from the closing position to the opening position, after strip 12 is cut along opening path P by knife 11.

In particular, second opening device 33 is configured to control a rotation of each openable portion 31 about the respective aforementioned virtual hinge and away from upper side 4c.

Therefore, the movement of each openable portion 31 from its closing position to its opening position corresponds, in use, to a rotation of such openable portion 31 about its respective virtual hinge.

Preferably, second opening device 33 comprises a set of further suction cups 13, two in this specific embodiment, configured to cooperate in contact with openable portions 31 and activable to apply a suction thereon capable of retaining openable portions 31 and displace them from the closing position to the opening position.

In detail, suction cups 13 are mounted on robotic tool 6 by means of respective lever members, in particular respective L-shaped bars 21 of second opening device 33, which respectively connect suction cups 13 with the above-mentioned back wall of robotic tool 6.

In greater detail, bars 21 are coupled to corresponding motors 22, fitted on the back wall of robotic tool 6 and configured to control a movement of bars 21 from:
- a first position, in which suction cups 13 cooperate in contact with openable portions 31 arranged in the closing position; to
- a second position, in which suction cups 13 cooperate in contact with openable portions 31 arranged in the opening position.

In other words, motors 22 control, in use, a rotation of bars 21 about respective axes thereof and, consequently, an eccentric rotation of suction cups 13 about the same axes, respectively.

In practice, after strip 12 has been cut by knife 11, robotic arm 5 controls a movement of robotic tool 6 thereby bringing suction cups 13 in contact with openable portions 31.

Once in contact with openable portions 31, suction cups 13 are activated to apply a suction thereon and motors 22 control the rotation of bars 21, thereby controlling the eccentric rotation of suction cups 13, causing openable portions 31 to move from their closing positions to their opening positions.

In case receptacle 4 has four openable portions 31, the prior operation is repeated twice.

Once openable portions 31 are opened, receptacle 4 is completely arranged in the open state and is ready to be picked up again from opening station B.

In particular, after the opening operations have been performed, robotic tool 6 is configured to pick up again the open receptacle 4 and to carry the receptacle 4 from table unit 14 to output station 0, where receptacle 4 is emptied and the caps are fed to hopper 2.

For this purpose, robotic tool 6 comprises the aforementioned jaw member 23, which is configured to pick receptacle 4 arranged in the open state from opening station B, in particular from slide 15 of table unit 14 after the opening operations have been completed.

In detail, jaw member 23 is configured to pick receptacle 4 by fitting laterally around main body 4a.

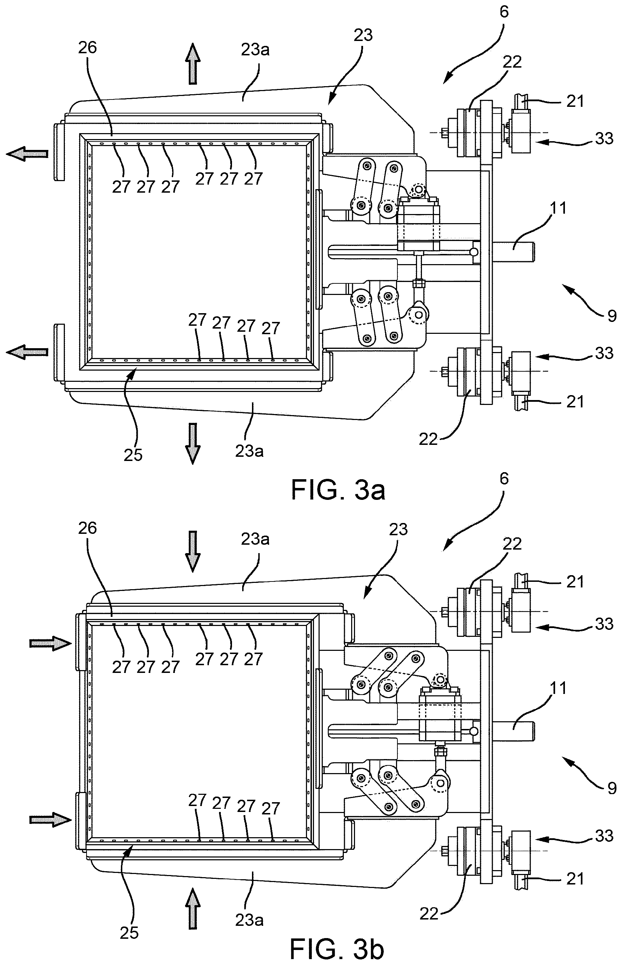

In greater detail, jaw member 23 comprises a pair of jaws 23a, which are controllable, in use, between:
- an open configuration, in which jaws 23a are open (Figure 3a); and
- a closed configuration, in which jaws 23a close around respective lateral walls 4b of main body 4a, so as to fit laterally around main body 4a, thereby retaining receptacle 4 (Figure 3b).

Furthermore, jaw member 23 is configured to bring and maintain openable portions 31, already arranged in their opening positions, in contact with such respective lateral walls 4b.

In other words, jaws 23a, during their movement from the open configuration towards the closed configuration, push openable portions 31, already arranged in their opening positions, towards lateral walls 4b. When jaws 23a reach the closed configuration, they maintain openable portions 31 in contact with the corresponding lateral walls 4b and, therefore, hold openable portions 31 in their opening positions.

According to a possible alternative not shown, jaw member 23 is configured to maintain openable portions 31 near, but not in contact, with the corresponding lateral walls 4b.

In light of the above, jaws 23a hold openable portions 31 in their opening positions from opening station B to output station 0.

In this condition, robotic arm 5 lifts receptacle 4 from slide 15 and carries such receptacle 4 to output station 0.

At this point, robotic arm 5 controls robotic tool 6 to rotate on itself, so as to cause a rotation of receptacle 4 on itself and the caps to exit from receptacle 4, thereby feeding hopper 2 and replenishing hopper 2 with the caps.

As visible in Figures 3a, 3b and 4, robotic tool 6 further comprises retaining means configured to hold the above-mentioned bag during emptying of receptacle 4 at output station 0.

In particular, robotic tool 6 comprises a vacuum device 25 configured to be activated when robotic tool 6 is turned upside down for emptying receptacle 4, in order to hold the bag and prevent the bag from exiting receptacle 4 and fall into hopper 2.

More specifically, vacuum device 25 comprises a frame 26 arranged on jaw member 23 and provided with a plurality of ports 27, which, in use, are connected to a vacuum generator 28 (shown in Figure 1).

In detail, vacuum device 25 is fluidically connected to vacuum generator 28 by means of ducts 29 (schematically shown in Figures 1 and 4).

In other words, the vacuum generated at ports 27 attracts the bag, thereby bringing the bag in contact with receptacle 4. In this way, vacuum device 25 prevents such bag from falling inside the hopper 2 along with the caps.

Moreover, the vacuum generated at ports 27 prevents dust eventually present within receptacle 4 but outside the bag from falling down inside hopper 2, thereby improving the hygienic conditions of the replenishment operation.

Conveniently, all the above operations are automatically controlled by means of a control unit 30, configured to receive signals from sensors (not shown) and from a controller (not shown) of hopper 2, and to send control signals to robotic arm 5, robotic tool 6, table unit 14, and vacuum generator device 28.

The operation of robotic tool 6 is described hereinafter with reference to a single receptacle 4 present, in the closed state, in replenishment plant 1, and starting from a condition in which receptacle 4 is at input station I.

In this condition, robotic tool 6, controlled and displaced by robotic arm 5, picks, by means of suction cups 8, receptacle 4 and carries receptacle 4 towards opening station B and, therefore, towards table unit 14.

Then, robotic tool 6 releases receptacle 4 on slide 15, and control unit 30 controls the movement of slide 15 from the first position to the second position and, hence, the movement of receptacle 4 from the release position to the operative position.

During such movement, positioning device 16 cause opening path P to nominally align with cutting path C.

At this point, once receptacle 4 is in the operative position, the opening operations are performed by robotic tool 6. In detail: knife 11 is controlled along cutting path C, so as to cut strip 12 along opening path P, thereby loosening openable portions 31; and suction cups 13 are controlled to move openable portions 31 from their closing positions to their opening positions.

Once the openable portions 31 are in their opening positions, robotic tool 6 picks up again the open receptacle 4, by means of jaw member 23, and carries receptacle 4 from opening station B to output station 0.

During this phase, jaw member 23 fits around main body 4a of receptacle 4 so as to bring openable portions 31 in contact with the corresponding lateral walls 4b of receptacle 4, and so as to maintain openable portions 31 in contact with (pressed against) such lateral walls 4b.

At this point, control unit 30 controls robotic tool 6 to rotate, causing the caps to fall into hopper 2, thereby emptying receptacle 4 and replenishing hopper 2.

At the same time, vacuum device 25 is activated for retaining the bag containing the caps, preventing such bag from falling into hopper 2 and dust eventually present within receptacle 4 but outside the bag to fall into hopper 2.

Once all the caps have been fed to hopper 2, receptacle 4 is discarded.

The operation is repeated for each receptacle 4 provided at input station I.

The advantages of robotic tool 6 according to the present invention will be clear from the foregoing description.

In particular, the whole replenishment operation is optimized as the automation of the process ensures that the caps are provided always at the right moment, thereby improving the buffering of hopper 2.

Furthermore, safety risks are reduced, as no human interaction is needed (no risk of receptacle 4 falling and hurting, no risk of knife utilization by a human operator).

In addition, proper hygienic conditions are maintained: no human operator is required to handle receptacles 4 and the risk of dust and other debris eventually present within receptacle 4 but outside the bag falling into hopper 2 is minimized thanks to vacuum device 25.

Clearly, changes may be made to replenishment plant 1 as described herein without, however, departing from the scope of protection as defined in the accompanying claims.

## Claims

1. A robotic tool (6) for a replenishment plant (1) configured to replenish a storage unit (2) with a plurality of caps destined to be applied onto packages containing a pourable product; said replenishment plant (1) being provided with a robotic arm (5) configured to carry at least one receptacle (4) containing said caps from an input station (I), at which said receptacle (4) is provided in a closed state, to an output station (0), at which said caps are fed to said storage unit (2) by emptying said receptacle (4) arranged in an open state; said robotic arm (5) carrying, in use, said robotic tool (6) between said input station (I) and said output station (0);
said robotic tool (6) comprising:
- gripping means (32) configured to pick said receptacle (4) at said input station (I) and to carry said receptacle (4) from said input station (I) to said output station (0); and
- an opening assembly (9) configured to control said receptacle (4) from the closed state to the open state.

2. The robotic tool as claimed in claim 1, wherein said gripping means (32) comprise a first picking device (7) configured to pick said receptacle (4) in the closed state at said input station (I) and to carry said receptacle (4) at least from said input station (I) to an opening station (B).

3. The robotic tool as claimed in claim 2, wherein said first picking device (7) comprises at least one suction member (8) configured to cooperate in contact with said receptacle (4) and activable, in use, to apply a suction onto said receptacle (4) so as to hold said receptacle (4) at least from said input station (I) to said opening station (0).

4. The robotic tool as claimed in claim 2 or 4, wherein said first picking device (7) is configured to release said receptacle (4) at said opening station (B).

5. The robotic tool as claimed in claim 4, wherein said opening assembly (9) comprising a first opening device (11) controllable, in use, along a pre-determined nominal opening path (C) so as to open said receptacle (4) at least along one opening path (P) of said receptacle (4), when said receptacle (4) is at said opening station (B).

6. The robotic tool as claimed in claim 5, wherein said receptacle (4) comprises a main body (4a), openable on a side (4c) thereof and housing, in use, said caps, and at least one openable portion (31) movably connected to said main body (4a) and covering said receptacle (4), when said receptacle (4) is in the closed state, at said side (4c), so as to close said receptacle (4);
said openable portion (31) being movable from:
- a closing position, in which said openable portion (31) covers said side (4c) so as to prevent said caps from exiting said receptacle (4); to
- an opening position, in which said openable portion (31) uncovers said side (4c) so as to allow said caps to exit said receptacle (4).

7. The robotic tool as claimed in claim 6, wherein said receptacle (4) comprises a cuttable element (12) configured to keep said openable portion (31) in said closing position;
said cuttable element (12) being provided with said opening path (P);
said first opening device (11) being configured to cut said cuttable element (12) along said opening path (P), so as to loosen said openable portion (31) from said main body (4a) and allow said openable portion (31) to be moved from said opening position to said closing position.

8. The robotic tool as claimed in claim 7, wherein said opening assembly (9) comprises a second opening device (33) configured to cooperate in contact with said openable portion (31) and drivable, in use, to control the movement of said openable portion (31) from said closing position to said opening position, after said cuttable element (12) is cut along said opening path (P) by said first opening device (7).

9. The robotic tool as claimed in claim 8, wherein said openable portion (31) is movably connected to said main body (4a) by means of a connecting portion defining a virtual hinge; said second opening device (33) being configured to control a rotation of said openable portion (31) about said virtual hinge and away from said side (4c), when said second opening device (33) controls the movement of said openable portion (31) from said closing position to said opening position.

10. The robotic tool as claimed in claim 8 or 9, wherein said second opening device (33) comprises at least one further suction member (13), carried by said robotic tool (6), configured to cooperate in contact with said openable portion (31) and activable, in use, to apply a suction onto said openable portion (31) so as to move said openable portion (31) from said closing position to said opening position.

11. The robotic tool as claimed in claim 10, wherein said second opening device (33) comprises a lever member (21); said further suction member (13) being movably coupled to said robotic tool (6) by means of said lever member (21); said robotic tool (6) comprising actuator means (22) configured to control a movement of said lever member (21) from:
- a first position, in which said further suction member (13) cooperates in contact with said openable portion (31) in said closing position; to
- a second position, in which said further suction member (13) cooperates in contact with said openable portion (31) in said opening position.

12. The robotic tool as claimed in any one of claims 2 to 11, wherein said gripping means (32) comprise a second picking device (32) configured to pick said receptacle (4) arranged in the open state at said opening station (B) and carry said receptacle (4) arranged in the open state to said output station (0).

13. The robotic tool as claimed in claim 12, when depending from any one of claims 6 to 11, wherein said second picking device (23) is further configured to keep said openable portion (31) in said opening position, at least from said opening station (B) to said output station (0).

14. The robotic tool as claimed in claim 13, wherein said side (4c) is an upper side of said main body (4a) ;
said second picking device (23) defines a jaw member configured to pick said receptacle (4) arranged in the open state at said opening station (B) by fitting laterally around said main body (4a);
said jaw member being further configured to bring and maintain said openable portion (31) arranged in the opening position in contact with at least one lateral side (4b) of said main body (4a).

15. The robotic tool as claimed in any one of the foregoing claims, wherein said caps are provided inside a bag element housed within said receptacle (4);
said robotic tool (6) comprising retaining means configured to hold said bag element during emptying of said receptacle (4) from said caps at said output station (0) .

16. The robotic tool as claimed in claim 15, wherein said retaining means comprise a vacuum device (25) .

17. The robotic tool as claimed in claim 16, wherein said vacuum device (25) comprises:
- a frame (26) provided with a plurality of vacuum ports (27) configured to attract said bag element during emptying of said receptacle (4) from said caps; and
- a vacuum source (28) fluidically connected with said vacuum ports (27).
